# EUROPEAN PATENT APPLICATION

(11) **EP 4 783 003 A1**
(43) Date of publication of application: **29.07.2026**
(21) Application number: 24878944.8
(22) Date of filing: 14.10.2024
(51) Int. Cl.: G06F 9/50

(54) **RESOURCE SCHEDULING METHOD AND APPARATUS, AND SERVER**

(30) Priority: 19.10.2023 CN 202311364133
(71) Applicant: HUAWEI TECHNOLOGIES CO., LTD., Shenzhen 518129 (CN)
(72) Inventor: LUO, Wentao, Shenzhen, Guangdong 518129 (CN); HUA, Xingcheng, Shenzhen, Guangdong 518129 (CN); HE, Weihua, Shenzhen, Guangdong 518129 (CN); WANG, Yaoyuan, Shenzhen, Guangdong 518129 (CN); XU, Shu, Shenzhen, Guangdong 518129 (CN); HUANG, Yongbing, Shenzhen, Guangdong 518129 (CN); ZHANG, Ziyang, Shenzhen, Guangdong 518129 (CN)
(74) Representative: Maiwald GmbH
(86) International application number: PCT/CN2024/124636
(87) International publication number: WO 2025/082300

(57) **Abstract**

This application discloses a resource scheduling method and apparatus, and a server, and relates to the field of communication technologies. When an execution request of a first application is received, a first instruction stream feature of the first application is obtained. The first instruction stream feature indicates features of a plurality of first instructions included in the first application. A first resource allocation mode for the first application is determined based on the first instruction stream feature and a physical resource invoked by the first application. The physical resource invoked by the first application is optimized based on the first resource allocation mode. The resource allocation mode determined based on the instruction stream feature of the application is adapted to the plurality of instructions included in the application. In this way, the physical resource that is invoked by the application and that is optimized based on the resource allocation mode is adapted to the plurality of instructions. This achieves application-driven resource scheduling, so that a granularity of resource scheduling is fine, and resource utilization for different applications is improved.

## Description

This application claims priority to Chinese Patent Application No. 202311364133.2, filed on October 19, 2023 and entitled "RESOURCE SCHEDULING METHOD AND APPARATUS, AND SERVER", which is incorporated herein by reference in its entirety.

### TECHNICAL FIELD

This application relates to the field of communication technologies, and in particular, to a resource scheduling method and apparatus, and a server.

### BACKGROUND

With the explosive growth of data and model parameters, a concept of disaggregated and composable architecture is proposed. The disaggregated and composable architecture aims to precisely schedule, based on different requirements of different applications for various types of resources such as computing, storage, or acceleration resources, a plurality of types of resources for the different applications, thereby improving resource utilization.

The plurality of types of resources may refer to physical resources of different types, different structures, or different formats. For example, the plurality of types of resources include but are not limited to a central processing unit (central processing unit, CPU), a graphics processing unit (graphics processing unit, GPU), a data processing unit (data processing unit, DPU), an application-specific integrated circuit (application-specific integrated circuit, ASIC), a field programmable logic gate array (field programmable gate array, FPGA), a storage unit, a memory unit, and the like.

Physical resources need to be invoked for running different applications for a same service or different services. Therefore, how to optimize the resources invoked by the different applications to achieve resource scheduling is a problem urgently to be resolved.

### SUMMARY

This application provides a resource scheduling method and apparatus, and a server, to optimize a physical resource invoked by an application.

According to a first aspect, a resource scheduling method is provided, where the method includes: obtaining, when receiving an execution request of a first application, a first instruction stream feature of the first application, where the first application includes a plurality of first instructions, and the first instruction stream feature indicates features of the plurality of first instructions; determining a first resource allocation mode for the first application based on the first instruction stream feature and a physical resource invoked by the first application; and optimizing, based on the first resource allocation mode, the physical resource invoked by the first application.

In this method, because the instruction stream feature indicates the features of the plurality of instructions included in the application, the resource allocation mode determined based on the instruction stream feature of the application is adapted to the plurality of instructions included in the application. Therefore, the physical resource invoked by the application is optimized based on the resource allocation mode, so that the optimized physical resource is adapted to the plurality of instructions included in the application. This achieves application-driven resource scheduling, so that a granularity of resource scheduling is fine, and resource utilization of physical resources for different applications is improved.

In a possible implementation, a manner of determining the first resource allocation mode for the first application based on the first instruction stream feature and the physical resource invoked by the first application includes: determining, based on a first mapping relationship between instruction stream features and a resource allocation mode, a resource allocation mode corresponding to the first instruction stream feature; and determining the first resource allocation mode for the first application based on the resource allocation mode corresponding to the first instruction stream feature and the physical resource invoked by the first application. The first resource allocation mode is determined based on the first mapping relationship obtained in advance, so that efficiency of determining the first resource allocation mode is high.

In a possible implementation, the first mapping relationship further needs to be obtained before the resource allocation mode corresponding to the first instruction stream feature is determined based on the first mapping relationship between the instruction stream features and the resource allocation mode. A manner of obtaining the first mapping relationship includes: obtaining a plurality of sets of instruction stream features and device running features through sampling at a time interval in a process of executing a historical application, where an instruction stream feature and a device running feature in one set correspond to a same time interval; classifying the plurality of sets of instruction stream features and device running features to obtain a plurality of categories, where device running features of different categories have a similarity greater than a first similarity threshold, device running features of a same category have a similarity less than a second similarity threshold, and instruction stream features of a same category have a distance less than a distance threshold; obtaining, for any category of the plurality of categories, a resource allocation mode corresponding to the any category based on device running features included in the any category; and obtaining the first mapping relationship based on a resource allocation mode corresponding to each of the plurality of categories and at least one instruction stream feature included in each of the plurality of categories.

Because the instruction stream features in the first mapping relationship are obtained through real sampling, the obtained first mapping relationship is more authentic. In addition, because the resource allocation mode in the first mapping relationship is obtained through classification, device running features of a same category can be classified into one resource allocation mode. Therefore, the obtained first mapping relationship is more accurate, and the first resource allocation mode determined based on the first mapping relationship is more accurate.

In a possible implementation, a manner of classifying the plurality of sets of instruction stream features and device running features to obtain the plurality of categories includes: clustering a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and obtaining the plurality of categories based on the first quantity of clusters if a distance between instruction stream features in any one of the plurality of clusters is less than the distance threshold. Therefore, the classification of the plurality of device running features can be implemented through clustering, and determining of the distance threshold can verify whether a distance between instruction stream features of a same category is less than the distance threshold.

In a possible implementation, the classifying the plurality of sets of instruction stream features and device running features to obtain the plurality of categories includes: clustering a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and then clustering a plurality of device running features in the plurality of sets of instruction stream features and device running features based on a second quantity if a distance between instruction stream features in any one of the plurality of clusters is not less than the distance threshold, to re-obtain a plurality of clusters; and obtaining the plurality of categories based on the second quantity of re-obtained clusters if a distance between instruction stream features in any one of the re-obtained plurality of clusters is less than the distance threshold. Accuracy of the obtained plurality of categories can be improved in a manner of a plurality of times of clustering.

In a possible implementation, a manner of determining the first resource allocation mode for the first application based on the first instruction stream feature and the physical resource invoked by the first application may alternatively include: determining, based on a resource calculation model, a resource allocation mode corresponding to the first instruction stream feature, where the resource calculation model is used to output a corresponding resource allocation mode based on an input instruction stream feature; and determining the first resource allocation mode for the first application based on the resource allocation mode corresponding to the first instruction stream feature and the physical resource invoked by the first application. The first resource allocation mode is determined based on the resource calculation model obtained in advance, so that efficiency of determining the first resource allocation mode is high.

In a possible implementation, a manner of optimizing, based on the first resource allocation mode, the physical resource invoked by the first application includes: obtaining, based on a second mapping relationship between resource allocation modes and physical resources, a first physical resource corresponding to the first resource allocation mode; and optimizing, based on the first physical resource, the physical resource invoked by the first application. The first physical resource is determined based on the second mapping relationship obtained in advance, so that efficiency of determining the first physical resource is high. In addition, because the first physical resource corresponds to the first resource allocation mode, and the first resource allocation mode corresponds to the features of the plurality of first instructions included in the first application, the first physical resource corresponds to the first application. Therefore, the physical resource invoked by the first application is optimized based on the first physical resource, and an optimized physical resource better meets an execution requirement of the first application, thereby avoiding resource waste and effectively improving resource utilization.

In a possible implementation, the physical resource includes a CPU, a GPU, an ASIC, an FPGA, a storage unit, and a memory unit. A manner of obtaining, based on the second mapping relationship between the resource allocation modes and the physical resources, the first physical resource corresponding to the first resource allocation mode includes: When the first resource allocation mode is target-resource-intensive, the first physical resource includes a target resource accounting for a first proportion and another resource accounting for a second proportion, the target resource is any type of resource in the physical resource, the another resource is a resource other than the target resource in the physical resource, and the first proportion is greater than the second proportion. Corresponding physical resources are allocated for different resource allocation modes based on a plurality of types of resources in different proportions, so that a granularity of allocation of the physical resources is finer, and the first physical resource obtained based on the first resource allocation mode is more accurate.

In a possible implementation, the execution request of the first application may be received within a first time period; if an execution request of a second application is received within a second time period, a second instruction stream feature of the second application is obtained, where the second application includes a plurality of second instructions, and the second instruction stream feature indicates features of the plurality of second instructions; a second resource allocation mode for the second application is determined based on the second instruction stream feature and a physical resource invoked by the second application; and the physical resource invoked by the second application is optimized based on the second resource allocation mode. For different applications in different time periods, different physical resources may be flexibly scheduled, so that a time granularity of resource scheduling is finer.

In a possible implementation, the first instruction stream feature includes an instruction unit distribution feature, a basic block vector (basic block vector, BBV) distribution feature, and a hotspot function feature. The first instruction stream feature is represented by using the different types of features of the plurality of first instructions, so that the first instruction stream feature is more accurate, and can better indicate the features of the plurality of first instructions.

In a possible implementation, the device running feature includes front-end latency, front-end bandwidth, back-end execution occupancy, back-end memory subsystem occupancy, a pipeline full-load rate, memory access performance, translation lookaside buffer (translation lookaside buffer, TLB) performance, operating system (operating system, OS) performance, instruction mix dependency, high-latency instruction distribution, cache behavior, and branch behavior. A plurality of types of different features related to device running are used to represent the device running feature, so that the device running feature is more accurate, and can better indicate a feature generated when a device runs an application.

According to a second aspect, a resource scheduling apparatus is provided, where the apparatus includes:
an obtaining module, configured to obtain, when receiving an execution request of a first application, a first instruction stream feature of the first application, where the first application includes a plurality of first instructions, and the first instruction stream feature indicates features of the plurality of first instructions;
a determining module, configured to determine a first resource allocation mode for the first application based on the first instruction stream feature and a physical resource invoked by the first application; and
an optimization module, configured to optimize, based on the first resource allocation mode, the physical resource invoked by the first application.

In a possible implementation, the determining module is configured to determine, based on a first mapping relationship between instruction stream features and a resource allocation mode, a resource allocation mode corresponding to the first instruction stream feature; and determine the first resource allocation mode for the first application based on the resource allocation mode corresponding to the first instruction stream feature and the physical resource invoked by the first application.

In a possible implementation, the apparatus further includes: a sampling module, configured to obtain a plurality of sets of instruction stream features and device running features through sampling at a time interval in a process of executing a historical application, where an instruction stream feature and a device running feature in one set correspond to a same time interval; and a classification module, configured to classify the plurality of sets of instruction stream features and device running features to obtain a plurality of categories, where device running features of different categories have a similarity greater than a first similarity threshold, device running features of a same category have a similarity less than a second similarity threshold, and instruction stream features of a same category have a distance less than a distance threshold. The obtaining module is further configured to obtain, for any category of the plurality of categories, a resource allocation mode corresponding to the any category based on device running features included in the any category; and obtain the first mapping relationship based on a resource allocation mode corresponding to each of the plurality of categories and at least one instruction stream feature included in each of the plurality of categories.

In a possible implementation, the classification module is configured to cluster a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and obtain the plurality of categories based on the first quantity of clusters if a distance between instruction stream features in any one of the plurality of clusters is less than the distance threshold.

In a possible implementation, the classification module is configured to cluster a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and cluster a plurality of device running features in the plurality of sets of instruction stream features and device running features based on a second quantity if a distance between instruction stream features in any one of the plurality of clusters is not less than the distance threshold, to re-obtain a plurality of clusters; and obtain the plurality of categories based on the second quantity of re-obtained clusters if a distance between instruction stream features in any one of the re-obtained plurality of clusters is less than the distance threshold.

In a possible implementation, the determining module is configured to determine, based on a resource calculation model, a resource allocation mode corresponding to the first instruction stream feature, where the resource calculation model is used to output a corresponding resource allocation mode based on an input instruction stream feature; and determine the first resource allocation mode for the first application based on the resource allocation mode corresponding to the first instruction stream feature and the physical resource invoked by the first application.

In a possible implementation, the optimization module is configured to obtain, based on a second mapping relationship between resource allocation modes and physical resources, a first physical resource corresponding to the first resource allocation mode; and optimize, based on the first physical resource, the physical resource invoked by the first application.

In a possible implementation, the physical resource includes a CPU, a GPU, an ASIC, an FPGA, a storage unit, and a memory unit. The optimization module is configured for: When the first resource allocation mode is target-resource-intensive, the first physical resource includes a target resource accounting for a first proportion and another resource accounting for a second proportion, the target resource is any type of resource in the physical resource, the another resource is a resource other than the target resource in the physical resource, and the first proportion is greater than the second proportion.

In a possible implementation, the obtaining module is configured to obtain, when receiving the execution request of the first application within a first time period, the first instruction stream feature of the first application. The obtaining module is further configured to obtain, when receiving an execution request of a second application within a second time period, a second instruction stream feature of the second application, where the second application includes a plurality of second instructions, and the second instruction stream feature indicates features of the plurality of second instructions. The determining module is further configured to determine a second resource allocation mode for the second application based on the second instruction stream feature and a physical resource invoked by the second application. The optimization module is further configured to optimize, based on the second resource allocation mode, the physical resource invoked by the second application.

In a possible implementation, the first instruction stream feature includes an instruction unit distribution feature, a BBV distribution feature, and a hotspot function feature.

In a possible implementation, the device running feature includes front-end latency, front-end bandwidth, back-end execution occupancy, back-end memory subsystem occupancy, a pipeline full-load rate, memory access performance, TLB performance, OS performance, instruction mix dependency, high-latency instruction distribution, cache behavior, and branch behavior.

According to a third aspect, a server is provided, where the server includes a processor, the processor is coupled to a memory, the memory stores at least one program instruction or code, and the at least one program instruction or the code is loaded and executed by the processor, to enable the network device to implement the resource scheduling method according to the first aspect or any one of the first aspect.

According to a fourth aspect, a network device is provided, where the network device includes a processor, the processor is coupled to a memory, the memory stores at least one program instruction or code, and the at least one program instruction or the code is loaded and executed by the processor, to enable the network device to implement the resource scheduling method according to the first aspect or any one of the first aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into a same chip, or may be respectively disposed on different chips. A type of the memory and a manner of disposing the memory and the processor are not limited in this application.

According to a fifth aspect, a computer-readable storage medium is provided. The storage medium stores at least one instruction, and the instruction is loaded and executed by a processor, to enable a computer to implement the method according to any one of the first aspect or the possible implementations of the first aspect.

According to a sixth aspect, a computer program (product) is provided. The computer program (product) includes computer program code, and when the computer program code is run by a computer, the computer is enabled to perform the method according to the foregoing aspects.

According to a seventh aspect, a chip is provided, including a processor. The processor is configured to invoke, from a memory, instructions stored in the memory and run the instructions, to enable a communication device on which the chip is installed to perform the method according to the foregoing aspects.

According to an eighth aspect, another chip is provided, including an input interface, an output interface, a processor, and a memory. The input interface, the output interface, the processor, and the memory are connected to each other through an internal connection path. The processor is configured to execute code in the memory. When the code is executed, the processor is configured to perform the method according to the foregoing aspects.

It should be understood that, for beneficial effects achieved by the technical solutions in the second aspect to the eighth aspect and the corresponding possible implementations in this application, refer to the foregoing technical effects in the first aspect and the corresponding possible implementations. Details are not described herein again. In addition, the resource scheduling apparatus mentioned in the second aspect may be the chip mentioned in the seventh aspect or the eighth aspect, or the resource scheduling apparatus may be the server mentioned in the third aspect or the device mentioned in the fourth aspect.

### BRIEF DESCRIPTION OF DRAWINGS

FIG. 1 is a diagram of an implementation environment for a resource scheduling method according to an embodiment of this application;
FIG. 2 is a flowchart of a resource scheduling method according to an embodiment of this application;
FIG. 3 is a diagram of a resource scheduling process according to an embodiment of this application;
FIG. 4 is a diagram of a structure of a resource scheduling method according to an embodiment of this application;
FIG. 5 is a diagram of a structure of a resource scheduling apparatus according to an embodiment of this application;
FIG. 6 is a diagram of a structure of a network device according to an embodiment of this application;
FIG. 7 is a diagram of a structure of another network device according to an embodiment of this application; and
FIG. 8 is a diagram of a structure of a server according to an embodiment of this application.

### DESCRIPTION OF EMBODIMENTS

To make the objectives, technical solutions, and advantages of this application clearer, the following further describes the implementations of this application in detail with reference to the accompanying drawings.

With the rapid development of communication technologies, data and model parameters increase explosively. Consequently, applications have increasingly higher requirements on a memory, a storage capacity, and bandwidth, and an information technology (information technology, IT) infrastructure including hardware resources cannot meet the requirements. Therefore, a concept of a disaggregated and composable architecture is proposed. The disaggregated and composable architecture implements precise matching of a heterogeneous resource based on a requirement of an application on computing, storage, and acceleration, thereby flexibly allocating a plurality of types of resources. A resource obtained by combining the plurality of types of resources may be referred to as the heterogeneous resource.

The infrastructure that is based on the disaggregated and composable architecture includes a plurality of types of disaggregated resources. The plurality of types of resources may include a plurality of types of computing power resources, a plurality of types of storage resources, a plurality of types of acceleration resources, or the like. In other words, the heterogeneous resource may include a heterogeneous computing power, heterogeneous storage, or the like. For example, the plurality of types of resources include but are not limited to physical resources such as a CPU, a GPU, a DPU, an ASIC, an FPGA, a storage unit, and a memory unit. Different resources are suitable for providing different services. For example, the CPU resource is suitable for computation or data processing, and the GPU resource is suitable for acceleration processing. Therefore, how to adaptively combine and schedule proper heterogeneous resources based on different applications to achieve proper allocation of a plurality of types of resources becomes a challenge. To be specific, there is an urgent need to provide an application-driven automated scheduling method for a plurality of types of resources, to achieve natural integration of the infrastructure that is based on the disaggregated and composable architecture with a software toolchain based on application-driven resource scheduling, thereby fully exploiting potential of a data processor, a globally shared computing power, and a storage system.

In a conventional technology, a resource allocation method is selected depending on whether computational load of user data caching exceeds a specified threshold, and two types of resource allocation methods are provided for selection. The two types of resource allocation methods are respectively an efficient resource allocation method and a fair resource allocation method. However, the two types of resource scheduling methods are selected only depending on whether the computational load of the data caching exceeds the threshold. Consequently, a determining granularity of resource scheduling is excessively coarse, and accuracy of the resource scheduling is low.

An embodiment of this application provides a resource scheduling method. According to the method, based on an instruction stream feature of an application, a resource that matches a resource allocation mode for the application is scheduled, so that more accurate resource scheduling based on the application is achieved, and resource utilization is effectively improved. The scheduled heterogeneous resource is not limited in embodiments of this application, and may be any resource combination including a plurality of types of resources. For example, the heterogeneous resource may be a plurality of types of resources included in an infrastructure that is based on a disaggregated and composable architecture, or may be a plurality of types of computing powers included in a heterogeneous computing chip. Optionally, application scenarios of the method provided in this embodiment of this application include but are not limited to a super chip integrating diversified computing powers, a heterogeneous computing power chip, a public cloud, a private cloud, intra-chip heterogeneity, inter-chip heterogeneity, a heterogeneous cluster, and the like.

The super chip integrating the diversified computing powers is a chip integrating the diversified computing powers and having extremely high performance and functionality. The heterogeneous computing chip is a chip that employs a computing method in which compute units with different types of instruction sets and architectures form a system. The public cloud is an entity that provides a cloud service for a user by using a basic resource in a cloud computing mode, and the public cloud may also be considered as a cloud environment. The public cloud includes a cloud data center, and the cloud data center includes a large quantity of basic resources owned by a cloud service provider, where the large quantity of basic resources include a computing resource, a storage resource, and a network resource. The computing resource included in the cloud data center may be a computing device cluster, the computing device cluster includes at least one computing device, and the computing device may be a server, a terminal device, or the like. The private cloud is built for exclusive use of one customer, and therefore, provides most effective control over data, security, and quality of service. The intra-chip heterogeneity means that one chip integrates a plurality of types of computing powers. The inter-chip heterogeneity means that a plurality of chips integrate a plurality of types of computing powers in a heterogeneous manner. The heterogeneous cluster refers to a cluster including nodes with different configurations.

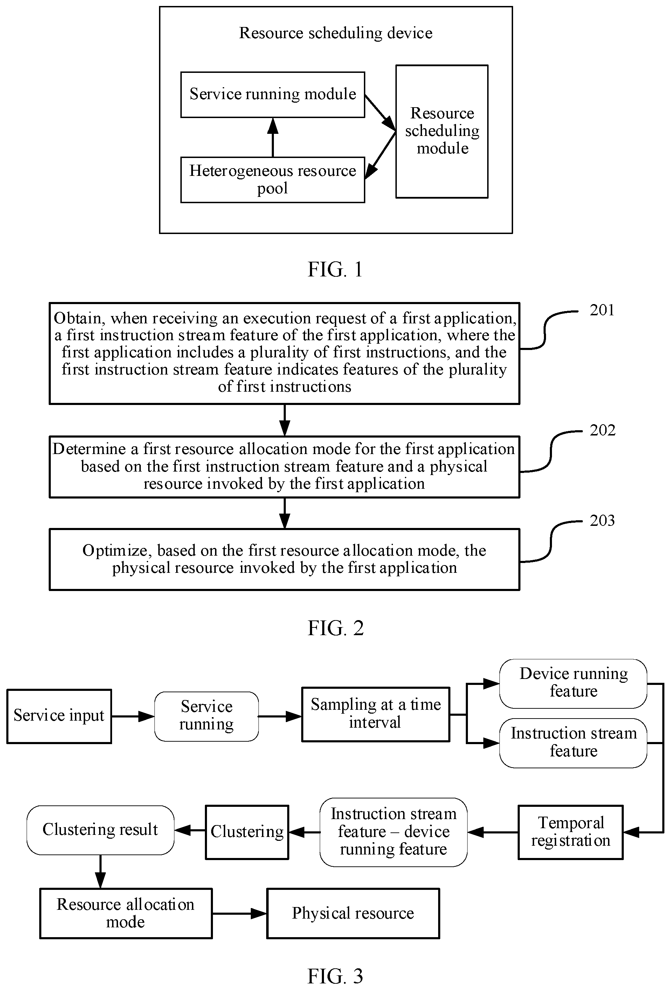

For example, FIG. 1 is a diagram of an implementation environment for a resource scheduling method according to an embodiment of this application. The implementation environment includes a resource scheduling device, and the resource scheduling device includes a service running module, a heterogeneous resource pool, and a resource scheduling module. The service running module is configured to execute, based on a resource in a heterogeneous resource pool, an application corresponding to a service, to implement running of the service. The heterogeneous resource pool includes different types of physical resources that can be invoked. The resource scheduling module is configured to invoke the physical resources in the heterogeneous resource pool for the service running module based on a resource allocation mode corresponding to an instruction stream feature of the application executed by the service running module.

FIG. 2 is a flowchart of a resource scheduling method according to an embodiment of this application. The method may be applied to the implementation environment shown in FIG. 1. For example, the method is performed by the resource scheduling device shown in FIG. 1. As shown in FIG. 2, the resource scheduling method includes but is not limited to the following step 201 to step 203.

Step 201: Obtain, when receiving an execution request of a first application, a first instruction stream feature of the first application, where the first application includes a plurality of first instructions, and the first instruction stream feature indicates features of the plurality of first instructions.

In embodiments of this application, the first application may be an application that needs to be executed for running any service, and the resource scheduling device runs the service by invoking a resource to execute the application. The first application may include the plurality of first instructions. The plurality of first instructions may be a plurality of instruction sequences that are executed logically independently of each other. The plurality of instruction sequences that are independently executed are an instruction stream. The resource scheduling device completes a function of the first application by executing the instruction stream. Optionally, the instruction sequence may include a jump instruction, a data processing instruction, an access instruction, a load or storage instruction, and the like.

An instruction stream feature of an application is not limited in embodiments of this application, provided that features of a plurality of instructions included in the application can be indicated. For example, the instruction stream feature may include at least one of an instruction unit distribution feature, a BBV distribution feature, and a hotspot function feature. The instruction unit distribution feature may be a feature of distribution of different types of instruction sequences in the application, the BBV distribution feature may be a feature of distribution of BBVs in the instruction sequences included in the application, and the hotspot function feature may be a feature of a hotspot function in the instruction sequences included in the application, where the hotspot function is a function that consumes longest execution time in the application. For example, the BBV is a multi-dimensional vector whose length is a positive integer, the BBV represents quantity information of different basic blocks (basic blocks, BBs), and the BB includes an instruction sequence between two adjacent jump instructions. A length of the BBV is a quantity of types of BBs included in the entire application, each vector dimension in the BBV represents one type of BB, a vector value is obtained by multiplying a quantity of BBs of this type in the entire application by a weight of this type of BB, and the weight is usually a quantity of instructions included in this type of BB.

Optionally, when the instruction stream feature includes the instruction unit distribution feature, the BBV distribution feature, and the hotspot function feature, a manner of obtaining the first instruction stream feature of the first application may be: obtaining the first instruction stream feature of the first application by using a simulation point (simulation point, simpoint) tool. The simpoint tool divides the application into a plurality of segments, obtains a feature of each segment, clusters the plurality of segments based on the feature of each segment, selects one representative instruction segment from each cluster, and uses a simulator to execute the selected instruction segment. Then, executed instruction segments are weighted based on a size of each cluster. In this way, program analysis and simulation time can be significantly reduced, an accurate representation of the complete program can be provided, and the instruction unit distribution feature, the BBV distribution feature, and the hotspot function feature that are included in the program are obtained through the accurate representation of the program.

Step 202: Determine a first resource allocation mode for the first application based on the first instruction stream feature and a physical resource invoked by the first application.

Because the first instruction stream feature indicates the features of the plurality of first instructions included in the first application, and execution of instructions with different features needs to consume different physical resources, the first instruction stream feature may represent a consumption situation of a physical resource required for executing the plurality of first instructions by the resource scheduling device. That is, different instruction stream features correspond to different physical resource consumption situations. In embodiments of this application, different physical resource consumption situations are classified into a plurality of resource allocation modes. Therefore, a resource allocation mode corresponding to the first instruction stream feature can be determined, and then the determined resource allocation mode corresponding to the first instruction stream feature is processed based on the physical resource currently invoked by the first application, so that the first resource allocation mode corresponding to the first application can be determined. In this case, the first resource allocation mode for the first application matches the basic first instruction stream feature, and is also adapted to the invoked physical resource.

The resource allocation mode is not limited in embodiments of this application, and may be flexibly configured based on an application scenario and a type of a physical resource. Optionally, the resource allocation mode may be CPU-intensive, GPU-intensive, ASIC-intensive, FPGA-intensive, memory-access-intensive, or the like. The CPU-intensive mode may be an allocation mode mainly focused on allocating a CPU resource, the GPU-intensive mode may be an allocation mode mainly focused on allocating a GPU resource, the ASIC-intensive mode may be an allocation mode mainly focused on allocating an ASIC resource, the FPGA-intensive mode may be an allocation mode mainly focused on allocating an FPGA resource, and the ASIC-intensive mode may be an allocation mode mainly focused on allocating an access resource and a storage resource. Optionally, the determining the first resource allocation mode for the first application based on the first instruction stream feature and the physical resource invoked by the first application may include the following two manners.

Manner 1: Determine, based on a first mapping relationship between instruction stream features and a resource allocation mode, the resource allocation mode corresponding to the first instruction stream feature; and determine the first resource allocation mode for the first application based on the resource allocation mode corresponding to the first instruction stream feature and the physical resource invoked by the first application.

In the manner 1, the first mapping relationship between the instruction stream features and the resource allocation mode needs to be obtained in advance. The first mapping relationship includes the plurality of instruction stream features, and each instruction stream feature includes a corresponding resource allocation mode. Optionally, the relationship between the instruction stream features and the resource allocation mode may be one-to-one or many-to-one. Therefore, when the first mapping relationship between the instruction stream features and the resource allocation mode is obtained, after the first instruction stream feature of the first application is obtained, the first instruction stream feature can be found in the first mapping relationship, so that the resource allocation mode corresponding to the first instruction stream feature can be determined in the first mapping relationship.

A manner of obtaining the first mapping relationship is not limited in embodiments of this application. For example, the first mapping relationship may be obtained through manual configuration based on experience, or may be obtained by using a machine learning method based on an execution situation of a historical application. In a possible implementation, the obtaining the first mapping relationship between the instruction stream features and the resource allocation mode may include but is not limited to the following step 1 to step 4.

Step 1: Obtain a plurality of sets of instruction stream features and device running features through sampling at a time interval in a process of executing the historical application, where an instruction stream feature and a device running feature in one set correspond to a same time interval.

The historical application is an application executed before the first application is executed, and the historical application may be an application executed in a process of running any service before the first application is executed. Optionally, setting of the time interval is not limited in embodiments of this application. The time interval may be a fixed-duration time interval, for example, sampling is performed every 10 minutes; or may be a variable-duration time interval, for example, first sampling is performed at a 10-minute interval, second sampling is performed at an 11-minute interval, third sampling is performed at a 12-minute interval, and so on. Each time sampling is performed, a corresponding instruction stream feature and a corresponding device running feature are obtained. After a plurality of instruction stream features and a plurality of device running features are obtained through a plurality of times of sampling, temporal registration may be performed on the plurality of instruction stream features and the plurality of device running features, so that a same time interval corresponds to an instruction stream feature and a device running feature in one set. For example, a time interval 1 corresponds to an instruction stream feature 1 and a device running feature 1, and a time interval 2 corresponds to an instruction stream feature 2 and a device running feature 2.

In a possible implementation, the device running feature may include at least one of front-end latency, front-end bandwidth, back-end execution occupancy, back-end memory subsystem occupancy, a pipeline full-load rate, memory access performance, TLB performance, OS performance, instruction mix dependency, high-latency instruction distribution, cache behavior, and branch behavior. In addition, the device running feature may further include another feature that can indicate a device running status. A front end is a front-end portion of a processor, for example, a front-end server that interacts with a user. The front-end latency is time consumed for user-initiated request data to be transmitted over a network to the front end. The front-end bandwidth refers to a data transmission capability of the front end. A back end runs in the background and is responsible for processing data and logic to control content of the front end. The back-end execution occupancy refers to memory occupied during service execution by the back end. The back-end memory subsystem occupancy refers to memory occupied during system software execution by the back end. The pipeline full-load rate refers to a ratio of instructions carried on an instruction execution pipeline. The memory access performance refers to a speed and efficiency demonstrated during data access by an access system, and a speed and efficiency demonstrated during data processing by a storage system. The TLB performance refers to a capability of a TLB to implement address translation. The OS performance refers to a capability of an OS to allocate a hardware resource through resource management and task scheduling. The instruction mix dependency refers to resource-based dependency among instructions. The high-latency instruction distribution refers to distribution of instructions that require long time for a processor to execute. The cache behavior refers to behavior of caching data in a cache area. The branch behavior refers to operation behavior that diverges from a main program path.

Optionally, for a manner of obtaining the instruction stream features through sampling, refer to the manner of obtaining the first instruction stream feature in step 201. Details are not described herein again. A manner of obtaining the device running features through sampling may be: obtaining, by using a performance (performance, ferf) tool, architecture-related features in the device running features through sampling. For example, the architecture-related features include the front-end latency, the front-end bandwidth, the back-end execution occupancy, the back-end memory subsystem occupancy, the pipeline full-load rate, the memory access performance, the TLB performance, and the OS performance; and obtaining, by using an xtrace tool, architecture-agnostic features in the device running features through sampling. For example, the architecture-agnostic features include the instruction mix dependency, the cache behavior, and the branch behavior. The perf tool is a performance analysis tool for Linux, can perform function-level and instruction-level hotspot searching, and can be used to analyze CPU utilization of a hotspot function in a program, thereby locating a performance bottleneck. The xtrace tool is a system call tracing tool used in the operating system, and a function thereof is to display a system call path and a traversed function in a stack format.

Step 2: Classify the plurality of sets of instruction stream features and device running features to obtain a plurality of categories, where device running features of different categories have a similarity greater than a first similarity threshold, device running features of a same category have a similarity less than a second similarity threshold, and instruction stream features of a same category have a distance less than a distance threshold.

In this embodiment of this application, the plurality of sets of instruction stream features and device running features that are obtained through sampling are classified into the plurality of categories based on a similarity of the device running features, so that the device running features of the different categories have the similarity greater than the first similarity threshold, and the device running features of the same category have the similarity less than the second similarity threshold. The first similarity threshold is greater than the second similarity threshold, and values of the first similarity threshold and the second similarity threshold may be flexibly set based on an application scenario, provided that device running features having a large similarity can be classified into a same category and device running features of different categories have a small similarity. Because the device running feature is a feature generated by an instruction executed on a device, and the instruction stream feature is a feature corresponding to the executed instruction, if a similarity between two device running features is large, a similarity between instruction stream features respectively corresponding to the two device running features is also large. Therefore, when the plurality of sets of instruction stream features and device running features are classified into the plurality of categories based on the similarity between the device running features, a distance between instruction stream features of a same category is less than a distance threshold. The distance threshold is related to the second similarity threshold. For example, a difference between the distance threshold and the second similarity threshold is small.

In a possible implementation, a manner of classifying the plurality of sets of instruction stream features and device running features to obtain the plurality of categories may be: clustering a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and obtaining the plurality of categories based on the first quantity of clusters if a distance between instruction stream features in any one of the plurality of clusters is less than the distance threshold; or clustering a plurality of device running features in the plurality of sets of instruction stream features and device running features based on a second quantity if a distance between instruction stream features in any one of the plurality of clusters is not less than the distance threshold, to re-obtain a plurality of clusters; and obtaining the plurality of categories based on the second quantity of re-obtained clusters if a distance between instruction stream features in any one of the re-obtained plurality of clusters is less than the distance threshold. Both the first quantity and the second quantity may be flexibly set based on experience or an application scenario. This is not limited in embodiments of this application. In other words, the clustering is performed based on different quantities until the clustering result meets a classification requirement.

A clustering algorithm used for clustering the plurality of device running features is not limited in embodiments of this application. Optionally, the clustering algorithm includes but is not limited to a hierarchical clustering algorithm, a K-means clustering algorithm (k-means clustering algorithm, K-means), an expectation-maximization (expectation-maximization, EM) algorithm, a K nearest neighbor (k nearest neighbor, KNN) algorithm, a density-based clustering method, or the like. The density-based clustering method includes a density-based spatial clustering of applications with noise (density-based spatial clustering of applications with noise, DBSCAN) algorithm and a maximum density clustering application (maximum density clustering application, MDCA) algorithm. A type of the similarity between the device running features is not limited in embodiments of this application. For example, a similarity between the instruction stream features may be a Euclidean distance, a Manhattan distance, a Chebyshev distance, a Minkowski distance, or the like between the instruction stream features.

Step 3: Obtain, for any category of the plurality of categories, a resource allocation mode corresponding to the any category based on device running features included in the any category.

After the plurality of categories are obtained through classification, each category includes at least one device running feature. When the at least one device running feature means a plurality of device running features, a similarity between the plurality of device running features is greater than the first similarity threshold, that is, the plurality of device running features have a common point. In embodiments of this application, a resource allocation mode may be determined based on device running features having a common point. For example, if all device running features included in any category indicate that CPU utilization is the largest, that is, a common point among the device running features included in the any category is the large CPU utilization, it may be determined that a resource allocation mode corresponding to the any category is CPU-intensive. Therefore, the resource allocation mode corresponding to the any category can be obtained based on the common point among the device running features included in the any category.

Optionally, the obtaining the resource allocation mode corresponding to the any category based on the device running features included in the any category may include: obtaining, based on a device running feature closest to a cluster center in the any category, the resource allocation mode corresponding to the any category; or based on K device running features close to a cluster center in the any category, obtaining the resource allocation mode corresponding to the any category based on the K device running features, where K is a positive integer.

Step 4: Obtain the first mapping relationship based on a resource allocation mode corresponding to each of the plurality of categories and at least one instruction stream feature included in each of the plurality of categories.

After the resource allocation mode corresponding to the any category is obtained based on the device running features included in the any category, the resource allocation mode corresponding to each of the plurality of categories may be obtained, and each category includes at least one instruction stream feature, so that a correspondence between at least one instruction stream feature included in any category and a resource allocation mode corresponding to the any category can be obtained, that is, the first mapping relationship is obtained. For example, a category 1 includes the instruction stream feature 1 and the device running feature 1, the instruction stream feature 2 and the device running feature 2, an instruction stream feature 3, and a device running feature 3. The device running feature 1, the device running feature 2, and the device running feature 3 correspond to a resource allocation mode 1. In this case, in the first mapping relationship, the instruction stream feature 1 corresponds to the resource allocation mode 1, the instruction stream feature 2 corresponds to the resource allocation mode 1, and the instruction stream feature 3 corresponds to the resource allocation mode 1.

Therefore, the first mapping relationship is obtained by using the foregoing steps 1 to 4. Because the instruction stream features in the first mapping relationship are obtained through real sampling, the obtained first mapping relationship is more authentic. In addition, because the resource allocation mode in the first mapping relationship is obtained through classification, device running features of a same category can be classified into one resource allocation mode. Therefore, the obtained first mapping relationship is more accurate. In addition, accuracy of the obtained plurality of categories can be improved in a manner of a plurality of times of clustering.

Manner 2: Determine, based on a resource calculation model, the resource allocation mode corresponding to the first instruction stream feature, where the resource calculation model is used to output a corresponding resource allocation mode based on an input instruction stream feature; and determine the first resource allocation mode for the first application based on the resource allocation mode corresponding to the first instruction stream feature and the physical resource invoked by the first application.

In the manner 2, the resource calculation model needs to be obtained in advance. A manner of obtaining the resource calculation model is not limited in embodiments of this application, provided that the resource calculation model can be used to output the corresponding resource allocation mode based on the input instruction stream feature. Optionally, the manner of obtaining the resource calculation model is similar to the manner of obtaining the first mapping relationship. To be specific, the plurality of sets of instruction stream features and device running features are obtained through sampling at the time interval in the process of executing the historical application, where the instruction stream feature and the device running feature in the one set correspond to the same time interval; and an initial calculation model is trained based on the plurality of sets of instruction stream features and device running features, and the resource calculation model is obtained based on a trained initial calculation model.

Regardless of the foregoing manner 1 or manner 2, after the resource allocation mode corresponding to the first instruction stream feature is determined, the first resource allocation mode for the first application can be determined based on the resource allocation mode corresponding to the first instruction stream feature and the physical resource currently invoked by the first application. For example, if the resource allocation mode corresponding to the first instruction stream feature is FPGA-intensive, and the physical resource currently invoked by the first application includes an FPGA, it is determined that the first resource allocation mode for the first application is FPGA-intensive.

Step 203: Optimize, based on the first resource allocation mode, the physical resource invoked by the first application.

In embodiments of this application, because the resource allocation mode can indicate a proportional pattern of a physical resource that needs to be invoked, a physical resource that matches the first resource allocation mode can be obtained based on the first resource allocation mode, and the physical resource invoked by the first application is optimized based on the physical resource that matches the first resource allocation mode, so that an optimized physical resource matches the first resource allocation mode, in other words, the optimized physical resource matches the executed first application. The physical resource may be a heterogeneous resource including a plurality of types of resources in different proportions, for example, 50% memory and 50% CPU. Alternatively, the physical resource may be a heterogeneous resource including a plurality of types of resources in different unit quantities, for example, 10 megabytes (megabytes, MB) of memory and 3 megahertz (MHz) of CPU.

In a possible implementation, a manner of optimizing, based on the first resource allocation mode, the physical resource invoked by the first application may be: obtaining, based on a second mapping relationship between resource allocation modes and physical resources, a first physical resource corresponding to the first resource allocation mode; and optimizing, based on the first physical resource, the physical resource invoked by the first application. The second mapping relationship between the resource allocation modes and the physical resources includes a one-to-one correspondence between the plurality of resource allocation modes and the plurality of physical resources. Therefore, based on the obtained second mapping relationship between the resource allocation modes and the physical resources, after the first resource allocation mode corresponding to the first application is determined, the first resource allocation mode can be found in the second mapping relationship, and the first physical resource corresponding to the first resource allocation mode is determined in the second mapping relationship.

A manner of obtaining the second mapping relationship between the resource allocation modes and the physical resources is not limited in embodiments of this application. Optionally, the second mapping relationship between the resource allocation modes and the physical resources may be manually configured based on experience or an experimental method, or proper physical resources may be automatically configured for different resource allocation modes by using a machine learning model. Optionally, the physical resource may include a CPU, a GPU, an ASIC, an FPGA, a storage unit, and a memory unit. In this case, the obtaining, based on the second mapping relationship between the resource allocation modes and the physical resources, the first physical resource corresponding to the first resource allocation mode may include: When the first resource allocation mode is target-resource-intensive, the first physical resource includes a target resource accounting for a first proportion and another resource accounting for a second proportion, the target resource is any type of resource in the physical resource, the another resource is a resource other than the target resource in the physical resource, and the first proportion is greater than the second proportion. Values of the first proportion and the second proportion may be set based on experience, or may be flexibly adjusted based on an application scenario.

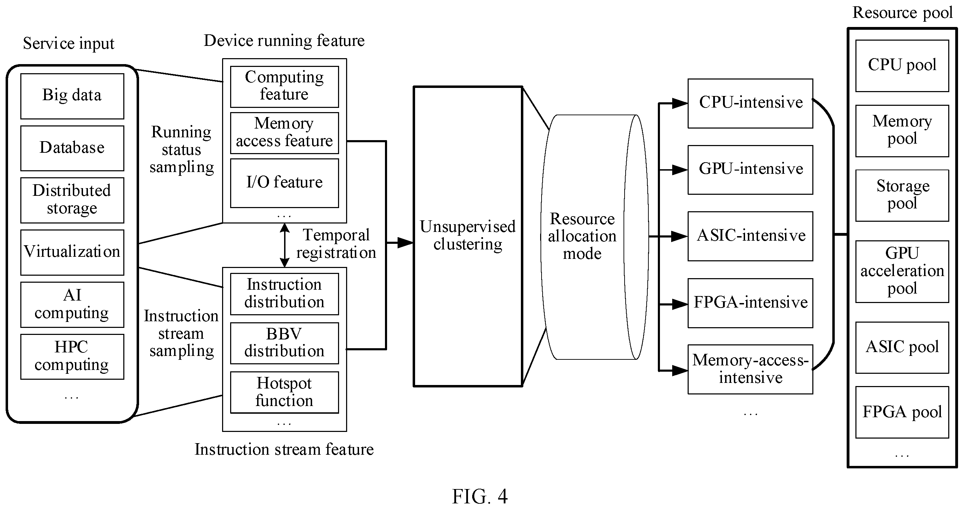

With reference to diagrams shown in FIG. 3 and FIG. 4, processes of obtaining a first mapping relationship and a second mapping relationship are described using examples. A service input module runs a service by establishing a service running enabling platform and a background configuration environment. The service may include a service in a computing and storage field, for example, a related platform such as big data, a database, distributed storage, virtualization, artificial intelligence (artificial intelligence, AI) computing, high performance computing (high performance computing, HPC) computing, or rendering, and a corresponding test case.

A time-interval sampling module samples device running features and instruction stream features in a service running process at a time interval. The device running features are obtained through running status sampling, and include but are not limited to a computing feature, a memory access feature, and an input/output (input/output, I/O) feature. The instruction stream features are obtained through instruction stream sampling, and include but are not limited to an instruction distribution feature, a BBV distribution feature, and a hotspot function feature. A temporal registration module performs, based on a timestamp, registration on device running features and instruction stream features obtained based on different time intervals, to obtain a plurality of sets of paired device running features and instruction stream features.

A clustering module provides an initial cluster quantity by using an adaptive unsupervised clustering method. For example, the initial cluster quantity is 3, and the device running features and the instruction stream features obtained based on the different time intervals may be referred to as device running features and instruction stream features of different time slices. Based on the device running features, clustering is performed on the different time slices to obtain a plurality of clustering results. For each cluster, time slices closest to and farthest from a cluster center are traversed, and a Euclidean distance between instruction stream features included in the closest and farthest time slices is calculated. If the Euclidean distance is greater than a specified threshold, the cluster quantity is modified, and the clustering is performed again; or if the Euclidean distance is less than a specified threshold, the clustering is completed and processing of a next resource allocation mode module is performed.

The resource allocation mode module analyzes, based on the clustering results, a typical resource allocation mode corresponding to each cluster, for example, extracts K device running features close to the cluster center, where K is a positive integer, collects statistics on a common point of the K device running features or a dominant device running feature in the K device running features, and determines, based on the common point or the dominant device running feature, the typical resource allocation mode representing the cluster. For example, the resource allocation mode may include a CPU-intensive mode, a GPU-intensive mode, an ASIC-intensive mode, an FPGA-intensive mode, or a memory-access-intensive mode. Therefore, the first mapping relationship is obtained based on an instruction stream feature included in each cluster and the resource allocation mode corresponding to each cluster.

A physical resource module allocates a most suitable physical resource for each resource allocation mode, where the physical resource may be obtained by combining a plurality of types of heterogeneous resources in a resource pool, and obtains the second mapping relationship between resource allocation modes and physical resources. The resource pool may include a CPU pool, a memory pool, a storage pool, a GPU acceleration pool, an ASIC pool, an FPGA pool, and the like. Therefore, automated selection of diverse resources can be achieved based on the first mapping relationship and the second mapping relationship. This not only provides a standardized procedure for proper scheduling and combination of heterogeneous computing power and storage hardware resources, but also implements fine-grained resource scheduling, and implements proportional combination of heterogeneous resources, thereby achieving an objective of adaptively and optimally adjusting hardware configurations for different applications.

Optionally, the execution request of the first application may be received within a first time period. In this case, if an execution request of a second application is received within a second time period, similarly, a second instruction stream feature of the second application is obtained, where the second application includes a plurality of second instructions, and the second instruction stream feature indicates features of the plurality of second instructions. A second resource allocation mode for the second application is determined based on the second instruction stream feature and a physical resource invoked by the second application. The physical resource invoked by the second application is optimized based on the second resource allocation mode. The first application and the second application may be applications for a same service, or may be applications for different services. The second time period may be a time period after the first time period. Optionally, the second time period may be adjacent to the first time period. For different applications in different time periods, different physical resources may be flexibly scheduled, so that a time granularity of resource scheduling is finer. The resource scheduling refers to optimizing a physical resource that has been invoked, so that an invoked physical resource obtained through optimization matches a resource scheduling mode corresponding to an instruction stream feature.

According to the method provided in embodiments of this application, because the instruction stream feature indicates the features of the plurality of instructions included in the application, the resource allocation mode determined based on the instruction stream feature of the application is adapted to the plurality of instructions included in the application. Therefore, the physical resource invoked by the application is optimized based on the resource allocation mode, so that a physical resource that is invoked by the application and that is obtained through optimization is adapted to the plurality of instructions included in the application. This achieves application-driven resource scheduling, so that a granularity of resource scheduling is fine, and resource utilization of physical resources for different applications is improved.

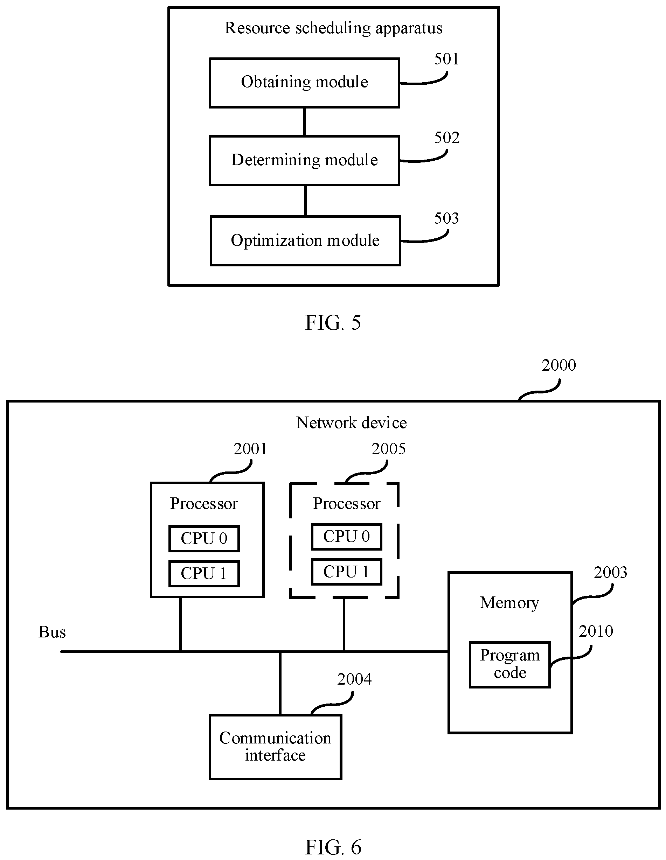

The foregoing describes the resource scheduling method in embodiments of this application. In correspondence to the foregoing method, an embodiment of this application further provides a resource scheduling apparatus. FIG. 5 is a diagram of a structure of a resource scheduling apparatus according to an embodiment of this application. Based on the following plurality of modules shown in FIG. 5, the resource scheduling apparatus shown in FIG. 5 can perform all or some of the operations shown in FIG. 2. It should be understood that the apparatus may include more additional modules than the shown modules or a part of the shown modules may be omitted. This is not limited in embodiments of this application. As shown in FIG. 5, the apparatus includes:
an obtaining module 501, configured to obtain, when receiving an execution request of a first application, a first instruction stream feature of the first application, where the first application includes a plurality of first instructions, and the first instruction stream feature indicates features of the plurality of first instructions;
a determining module 502, configured to determine a first resource allocation mode for the first application based on the first instruction stream feature and a physical resource invoked by the first application; and
an optimization module 503, configured to optimize, based on the first resource allocation mode, the physical resource invoked by the first application.

In a possible implementation, the determining module 502 is configured to determine, based on a first mapping relationship between instruction stream features and a resource allocation mode, a resource allocation mode corresponding to the first instruction stream feature; and determine the first resource allocation mode for the first application based on the resource allocation mode corresponding to the first instruction stream feature and the physical resource invoked by the first application.

In a possible implementation, the apparatus further includes: a sampling module, configured to obtain a plurality of sets of instruction stream features and device running features through sampling at a time interval in a process of executing a historical application, where an instruction stream feature and a device running feature in one set correspond to a same time interval; and a classification module, configured to classify the plurality of sets of instruction stream features and device running features to obtain a plurality of categories, where device running features of different categories have a similarity greater than a first similarity threshold, device running features of a same category have a similarity less than a second similarity threshold, and instruction stream features of a same category have a distance less than a distance threshold. The obtaining module 501 is further configured to obtain, for any category of the plurality of categories, a resource allocation mode corresponding to the any category based on device running features included in the any category; and obtain the first mapping relationship based on a resource allocation mode corresponding to each of the plurality of categories and at least one instruction stream feature included in each of the plurality of categories.

In a possible implementation, the classification module is configured to cluster a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and obtain the plurality of categories based on the first quantity of clusters if a distance between instruction stream features in any one of the plurality of clusters is less than the distance threshold.

In a possible implementation, the classification module is configured to cluster a plurality of device running features in the plurality of sets of instruction stream features and device running features based on a first quantity, to obtain a plurality of clusters based on a clustering result, where device running features of different clusters have a similarity greater than the first similarity threshold, and device running features of a same cluster have a similarity less than the second similarity threshold; and cluster a plurality of device running features in the plurality of sets of instruction stream features and device running features based on a second quantity if a distance between instruction stream features in any one of the plurality of clusters is not less than the distance threshold, to re-obtain a plurality of clusters; and obtain the plurality of categories based on the second quantity of re-obtained clusters if a distance between instruction stream features in any one of the re-obtained plurality of clusters is less than the distance threshold.

In a possible implementation, the determining module 502 is configured to determine, based on a resource calculation model, a resource allocation mode corresponding to the first instruction stream feature, where the resource calculation model is used to output a corresponding resource allocation mode based on an input instruction stream feature; and determine the first resource allocation mode for the first application based on the resource allocation mode corresponding to the first instruction stream feature and the physical resource invoked by the first application.

In a possible implementation, the optimization module 503 is configured to obtain, based on a second mapping relationship between resource allocation modes and physical resources, a first physical resource corresponding to the first resource allocation mode; and optimize, based on the first physical resource, the physical resource invoked by the first application.

In a possible implementation, the physical resource includes a CPU, a GPU, an ASIC, an FPGA, a storage unit, and a memory unit. The optimization module 503 is configured for: When the first resource allocation mode is target-resource-intensive, the first physical resource includes a target resource accounting for a first proportion and another resource accounting for a second proportion, the target resource is any type of resource in the physical resource, the another resource is a resource other than the target resource in the physical resource, and the first proportion is greater than the second proportion.

In a possible implementation, the obtaining module 501 is configured to obtain, when receiving the execution request of the first application within a first time period, the first instruction stream feature of the first application. The obtaining module 501 is further configured to obtain, when receiving an execution request of a second application within a second time period, a second instruction stream feature of the second application, where the second application includes a plurality of second instructions, and the second instruction stream feature indicates features of the plurality of second instructions. The determining module 503 is further configured to determine a second resource allocation mode for the second application based on the second instruction stream feature and a physical resource invoked by the second application. The optimization module 503 is further configured to optimize, based on the second resource allocation mode, the physical resource invoked by the second application.

In a possible implementation, the first instruction stream feature includes an instruction unit distribution feature, a BBV distribution feature, and a hotspot function feature.

In a possible implementation, the device running feature includes front-end latency, front-end bandwidth, back-end execution occupancy, back-end memory subsystem occupancy, a pipeline full-load rate, memory access performance, TLB performance, OS performance, instruction mix dependency, high-latency instruction distribution, cache behavior, and branch behavior.

It should be understood that, when the apparatus provided in FIG. 5 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatuses provided in the foregoing embodiments and the method embodiments belong to a same concept. For details of a specific implementation process, refer to the method embodiments. Details are not described herein again.

FIG. 6 is a diagram of a structure of a network device 2000 according to an example embodiment of this application. The network device 2000 shown in FIG. 6 is configured to perform operations related to the resource scheduling method shown in FIG. 2. The network device 2000 is, for example, a switch or a router. The network device 2000 may be implemented by using a general bus architecture.

As shown in FIG. 6, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field programmable gate array (field programmable gate array, FPGA), generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of illustration, the bus is denoted by only one line in FIG. 6. However, it does not mean that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other optical disk storage, an optical disk storage (including a compact disc, a laser disc, an optical disc, a digital versatile disc, a Blu-ray disc, and the like), a magnetic disk storage medium or another magnetic storage device, or any other medium that can be used to carry or store desired program code in a form of an instruction or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an ethernet (Ethernet) interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 6. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may include a plurality of processors, for example, the processor 2001 and a processor 2005 shown in FIG. 6. Each of the processors may be a single-core processor (single-core CPU), or may be a multi-core processor (multi-core CPU). The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions in this application, and the processor 2001 may execute the program code 2010 stored in the memory 2003. In other words, the network device 2000 may implement, by using the processor 2001 and the program code 2010 in the memory 2003, the resource scheduling method provided in the method embodiments. The program code 2010 may include one or more software modules. Optionally, the processor 2001 may also store program code or instructions for executing the solutions of this application.

In a specific embodiment, the network device 2000 in this embodiment of this application may correspond to the resource scheduling device in the foregoing method embodiments, and the processor 2001 in the network device 2000 reads instructions in the memory 2003, so that the network device 2000 shown in FIG. 6 can perform all or some of operations performed by the resource scheduling device.

Specifically, the processor 2001 is configured to obtain, when receiving an execution request of a first application, a first instruction stream feature of the first application, where the first application includes a plurality of first instructions, and the first instruction stream feature indicates features of the plurality of first instructions; determine a first resource allocation mode for the first application based on the first instruction stream feature and a physical resource invoked by the first application; and optimize, based on the first resource allocation mode, the physical resource invoked by the first application.

For brevity, other optional implementations are not described herein again.

The network device 2000 may further correspond to the resource scheduling apparatus shown in FIG. 5, and each functional module in the resource scheduling apparatus is implemented by using software of the network device 2000. In other words, the functional module included in the resource scheduling apparatus is generated after the processor 2001 of the network device 2000 reads the program code 2010 stored in the memory 2003.

Steps of the resource scheduling method shown in FIG. 2 are implemented by using an integrated logic circuit of hardware in the processor of the network device 2000, or by using instructions in a form of software. The steps of the method disclosed with reference to embodiments of this application may be directly performed by a hardware processor, or may be performed by a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory. The processor reads information in the memory, and implements the steps of the foregoing method through hardware of the processor. To avoid repetition, details are not described herein again.

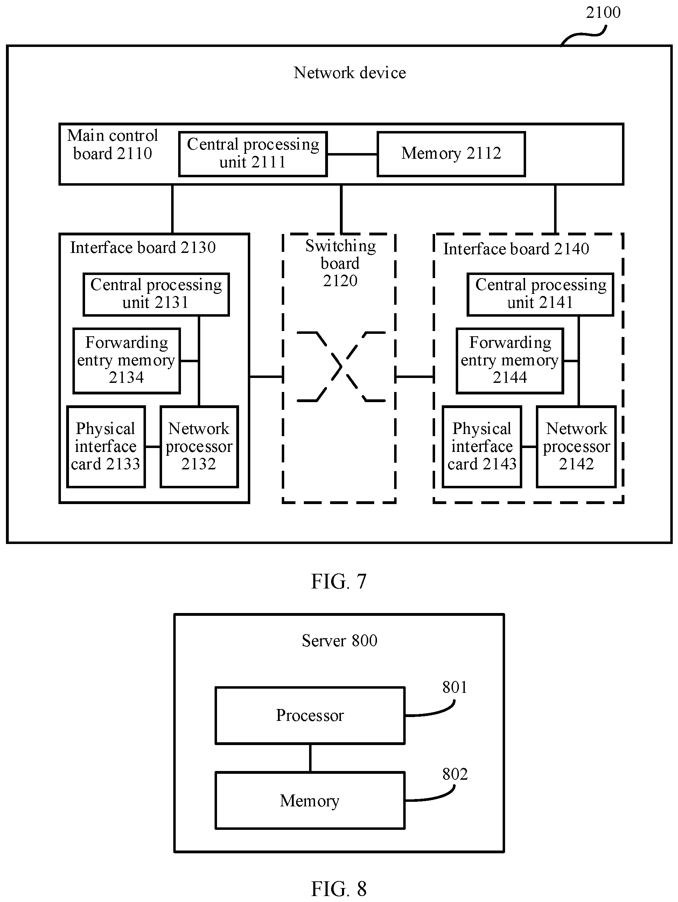

FIG. 7 is a diagram of a structure of a network device 2100 according to another example embodiment of this application. The network device 2100 shown in FIG. 7 is configured to perform all or some of operations in the resource scheduling method shown in FIG. 2 above. The network device 2100 is, for example, a switch or a router. The network device 2100 may be implemented by using a general bus architecture.

As shown in FIG. 7, the network device 2100 includes a main control board 2110 and an interface board 2130.

The main control board is also referred to as a main processing unit (main processing unit, MPU) or a route processor card (route processor card). The main control board 2110 is configured to control and manage each component in the network device 2100, including functions of route calculation, device management, device maintenance, and protocol processing. The main control board 2110 includes a central processing unit 2111 and a memory 2112.

The interface board 2130 is also referred to as a line interface unit (line processing unit, LPU), a line card (line card), or a service board. The interface board 2130 is configured to provide various service interfaces and implement data packet forwarding. The service interfaces include but are not limited to an ethernet interface, a POS (Packet over SONET/SDH) interface, and the like. The ethernet interface is, for example, a flexible ethernet service interface (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If the destination address of the packet is not the address of the network device 2100, the network processor 2132 finds, from the forwarding table based on the destination address, a next hop and an egress interface that correspond to the destination address, and forwards the packet to the egress interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130, and a processed packet is sent out from the physical interface card 2133. The physical interface card 2133 is also referred to as a subcard, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to perform data exchange between the interface boards. For example, the interface board 2130 and the interface board 2140 may communicate with each other through the switching board 2120.

The main control board 2110 is coupled to the interface board. For example, the main control board 2110, the interface board 2130, the interface board 2140, and the switching board 2120 are connected to a system backboard by a system bus for interworking. In a possible implementation, an inter-process communication (inter-process communication, IPC) protocol channel is established between the main control board 2110, the interface board 2130, and the interface board 2140. The main control board 2110 communicates with the interface board 2130 and the interface board 2140 through the IPC channel.

Logically, the network device 2100 includes a control plane and a forwarding plane. The control plane includes a main control board 2110 and a central processing unit 2111. The forwarding plane includes components that perform forwarding, for example, a forwarding entry memory 2134, a physical interface card 2133, and a network processor 2132. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger number of interface boards. There may also be one or more physical interface cards on the interface board. There may be no switching board or one or more switching boards. When there are a plurality of switching boards, load balancing and redundancy backup may be implemented jointly by the switching boards. In a centralized forwarding architecture, the network device may not need a switching board, and the interface board provides a function of processing service data of an entire system. In a distributed forwarding architecture, the network device may have at least one switching board, and data exchange between a plurality of interface boards is implemented through the switching board, to provide a large-capacity data exchange and processing capability. Therefore, a data access and processing capability of the network device having the distributed architecture is greater than that of the network device having the centralized architecture. Optionally, the form of the network device may alternatively be a single board. That is, there is no switch fabric board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form (for example, a network device such as a low-end switch or router) has a low data exchange and processing capability. A specific architecture that is to be used depends on a specific networking deployment scenario. This is not limited herein.

In a specific embodiment, the network device 2100 corresponds to the resource scheduling apparatus shown in FIG. 5. In some embodiments, the obtaining module 501, the determining module 502, and the optimization module 503 in the resource scheduling apparatus shown in FIG. 5 are equivalent to the central processing unit 2111 or the network processor 2132 in the network device 2100.

FIG. 8 is a diagram of a structure of a server according to an embodiment of this application. The server 800 may vary a lot due to different configurations or performance, and may include one or more processors 801 and one or more memories 802. The one or more memories 802 store at least one computer program. The at least one computer program is loaded and executed by the one or more processors 801, so that the server implements the resource scheduling method provided in the foregoing method embodiments. Certainly, the server 800 may further have components such as a wired or wireless network interface, a keyboard, and an input/output interface, to perform input/output. The server 800 may further include another component configured to implement a function of the device. Details are not described herein again.

It should be understood that the processor may be a CPU, or may be another general-purpose processor, a digital signal processor (digital signal processor DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, to enable a computer to implement any one of the foregoing resource scheduling method.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor. The processor is configured to invoke, from a memory, instructions stored in the memory and run the instructions, to enable a communication device on which the chip is installed to perform any one of the foregoing resource scheduling method.

An embodiment of this application further provides another chip, including an input interface, an output interface, a processor, and a memory. The input interface, the output interface, the processor, and the memory are connected to each other through an internal connection path. The processor is configured to execute code in the memory. When the code is executed, the processor is configured to perform any one of the foregoing resource scheduling method.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedures or functions according to this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive)), or the like.

A person of ordinary skill in the art may be aware that the method steps and modules described in embodiments disclosed in this specification may be implemented by software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, or an optical disc.

When software is used to implement embodiments, all or some of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Usually, the program module includes a routine, a program, a library, an object, a class, a component, a data structure, and the like, and executes a specific task or implements a specific abstract data structure. In various embodiments, functions of program modules may be combined or split between the described program modules. The machine-executable instructions for the program module may be executed locally or within a distributed device. In the distributed device, the program module may be located in both a local storage medium and a remote storage medium.

Computer program code used to implement the method in embodiments of this application may be written in one or more programming languages. The computer program code may be provided to a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or another form of a propagated signal, such as a carrier wave or an infrared signal.

The machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk drive, a random access memory (RAM), a read-only memory (ROM), an erasable programmable read-only memory (EPROM or flash memory), an optical storage device, a magnetic storage device, or any appropriate combination thereof.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the foregoing described device embodiment is merely an example. For example, division into modules is merely logical function division and may be another division manner during actual application. For example, a plurality of modules or components may be combined or may be integrated into another system, or some features may be ignored or not executed. In addition, the shown or discussed mutual couplings or direct couplings or communication connections may be indirect couplings or communication connections implemented by some interfaces, devices, or modules, or may be electrical, mechanical, or other forms of connection.

The modules described as separate components may or may not be physically separate, and components shown as modules may or may not be physical modules, to be specific, may be located in one place, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in a form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium such as a USB flash drive, a removable hard disk, a read-only memory (read-only memory, ROM), a random access memory (random access memory, RAM), a magnetic disk, or an optical disc that can store program code.

In this application, terms such as "first" and "second" are used to distinguish between same items or similar items that have basically same roles and functions. It should be understood that there is no logical or timing dependency between "first", "second", and "n^{th}", and neither a quantity nor an execution sequence is limited. It should also be understood that although the following descriptions use terms such as "first" and "second" to describe various elements, these elements should not be limited by the terms. These terms are simply used to distinguish one element from another. For example, without departing from the scope of various examples, a first image may be referred to as a second image, and similarly, the second image may be referred to as the first image. Both the first image and the second image may be images, and in some cases, may be separate and different images.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

In this application, the term "at least one" means one or more, and the term "a plurality of" in this application means two or more. For example, a plurality of second packets mean two or more second packets. The terms "system" and "network" are often used interchangeably herein.

It should be understood that the terms used in the descriptions of the various examples in this specification are merely intended to describe specific examples and are not intended to impose a limitation. As used in the descriptions of the various examples and the appended claims, the singular forms "a/an" ("a" and "an") and "the" are intended to include plural forms, unless otherwise clearly specified in the context.

It should also be understood that the term "and/or" used in this specification indicates and includes any or all possible combinations of one or more of the associated items listed. The term "and/or" describes an association relationship between associated objects and represents that three relationships may exist. For example, A and/or B may represent the following three cases: only A exists, both A and B exist, and only B exists. In addition, the character "/" in this application generally indicates an "or" relationship between the associated objects.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the terms "if" and "if" may be interpreted as a meaning of "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, but instead, B may be determined based on A and/or other information.

It should be further understood that "one embodiment", "an embodiment", and "a possible implementation" mentioned throughout the specification mean that a specific feature, structure, or feature related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or features may be combined in one or more embodiments in any appropriate manner.

The foregoing descriptions are merely optional embodiments of this application, but are not intended to limit this application. Any modification, equivalent replacement, or improvement made within the principle of this application should fall within the protection scope of this application.

## Claims

1. A resource scheduling method, wherein the method comprises:
obtaining, when receiving an execution request of a first application, a first instruction stream feature of the first application, wherein the first application comprises a plurality of first instructions, and the first instruction stream feature indicates features of the plurality of first instructions;
determining a first resource allocation mode for the first application based on the first instruction stream feature and a physical resource invoked by the first application; and
optimizing, based on the first resource allocation mode, the physical resource invoked by the first application.

2. The method according to claim 1, wherein the determining the first resource allocation mode for the first application based on the first instruction stream feature and the physical resource invoked by the first application comprises:
determining, based on a first mapping relationship between instruction stream features and a resource allocation mode, a resource allocation mode corresponding to the first instruction stream feature; and
determining the first resource allocation mode for the first application based on the resource allocation mode corresponding to the first instruction stream feature and the physical resource invoked by the first application.

3. The method according to claim 2, wherein before the determining, based on the first mapping relationship between the instruction stream features and the resource allocation mode, the resource allocation mode corresponding to the first instruction stream feature, the method further comprises:
obtaining a plurality of sets of instruction stream features and device running features through sampling at a time interval in a process of executing a historical application, wherein an instruction stream feature and a device running feature in one set correspond to a same time interval;
classifying the plurality of sets of instruction stream features and device running features to obtain a plurality of categories, wherein device running features of different categories have a similarity greater than a first similarity threshold, device running features of a same category have a similarity less than a second similarity threshold, and instruction stream features of a same category have a distance less than a distance threshold;
obtaining, for any category of the plurality of categories, a resource allocation mode corresponding to the any category based on device running features comprised in the any category; and
obtaining the first mapping relationship based on a resource allocation mode corresponding to each of the plurality of categories and at least one instruction stream feature comprised in each of the plurality of categories.

4. The method according to claim 3, wherein the classifying the plurality of sets of instruction stream features and device running features to obtain the plurality of categories comprises:
clustering a plurality of device running features in the plurality of sets of instruction stream features and device running features based on a first quantity, to obtain a plurality of clusters based on a clustering result, wherein device running features of different clusters have a similarity greater than the first similarity threshold, and device running features of a same cluster have a similarity less than the second similarity threshold; and
obtaining the plurality of categories based on the first quantity of clusters if a distance between instruction stream features in any one of the plurality of clusters is less than the distance threshold.

5. The method according to claim 3, wherein the classifying the plurality of sets of instruction stream features and device running features to obtain the plurality of categories comprises:
clustering a plurality of device running features in the plurality of sets of instruction stream features and device running features based on a first quantity, to obtain a plurality of clusters based on a clustering result, wherein device running features of different clusters have a similarity greater than the first similarity threshold, and device running features of a same cluster have a similarity less than the second similarity threshold; and
clustering a plurality of device running features in the plurality of sets of instruction stream features and device running features based on a second quantity if a distance between instruction stream features in any one of the plurality of clusters is not less than the distance threshold, to re-obtain a plurality of clusters; and obtaining the plurality of categories based on the second quantity of re-obtained clusters if a distance between instruction stream features in any one of the re-obtained plurality of clusters is less than the distance threshold.

6. The method according to claim 1, wherein the determining the first resource allocation mode for the first application based on the first instruction stream feature and the physical resource invoked by the first application comprises:
determining, based on a resource calculation model, a resource allocation mode corresponding to the first instruction stream feature, wherein the resource calculation model is used to output a corresponding resource allocation mode based on an input instruction stream feature; and
determining the first resource allocation mode for the first application based on the resource allocation mode corresponding to the first instruction stream feature and the physical resource invoked by the first application.

7. The method according to any one of claims 1 to 6, wherein the optimizing, based on the first resource allocation mode, the physical resource invoked by the first application comprises:
obtaining, based on a second mapping relationship between resource allocation modes and physical resources, a first physical resource corresponding to the first resource allocation mode; and
optimizing, based on the first physical resource, the physical resource invoked by the first application.

8. The method according to claim 7, wherein the physical resource comprises a central processing unit CPU, a graphics processing unit GPU, an application-specific integrated circuit ASIC, a field programmable gate array FPGA, a storage unit, and a memory unit; and
the obtaining, based on the second mapping relationship between the resource allocation modes and the physical resources, the first physical resource corresponding to the first resource allocation mode comprises:
when the first resource allocation mode is target-resource-intensive, the first physical resource comprises a target resource accounting for a first proportion and another resource accounting for a second proportion, the target resource is any type of resource in the physical resource, the another resource is a resource other than the target resource in the physical resource, and the first proportion is greater than the second proportion.

9. The method according to any one of claims 1 to 8, wherein the obtaining, when receiving the execution request of the first application, the first instruction stream feature of the first application comprises:
obtaining, when receiving the execution request of the first application within a first time period, the first instruction stream feature of the first application; and
the method further comprises:
obtaining, when receiving an execution request of a second application within a second time period, a second instruction stream feature of the second application, wherein the second application comprises a plurality of second instructions, and the second instruction stream feature indicates features of the plurality of second instructions;
determining a second resource allocation mode for the second application based on the second instruction stream feature and a physical resource invoked by the second application; and
optimizing, based on the second resource allocation mode, the physical resource invoked by the second application.

10. The method according to any one of claims 1 to 9, wherein the first instruction stream feature comprises an instruction unit distribution feature, a basic block vector BBV distribution feature, and a hotspot function feature.

11. The method according to any one of claims 3 to 5, wherein the device running feature comprises front-end latency, front-end bandwidth, back-end execution occupancy, back-end memory subsystem occupancy, a pipeline full-load rate, memory access performance, translation lookaside buffer TLB performance, operating system OS performance, instruction mix dependency, high-latency instruction distribution, cache behavior, and branch behavior.

12. A resource scheduling apparatus, wherein the apparatus comprises:
an obtaining module, configured to obtain, when receiving an execution request of a first application, a first instruction stream feature of the first application, wherein the first application comprises a plurality of first instructions, and the first instruction stream feature indicates features of the plurality of first instructions;
a determining module, configured to determine a first resource allocation mode for the first application based on the first instruction stream feature and a physical resource invoked by the first application; and
an optimization module, configured to optimize, based on the first resource allocation mode, the physical resource invoked by the first application.

13. The apparatus according to claim 12, wherein the determining module is configured to determine, based on a first mapping relationship between instruction stream features and a resource allocation mode, a resource allocation mode corresponding to the first instruction stream feature; and determine the first resource allocation mode for the first application based on the resource allocation mode corresponding to the first instruction stream feature and the physical resource invoked by the first application.

14. The apparatus according to claim 13, wherein the apparatus further comprises:
a sampling module, configured to obtain a plurality of sets of instruction stream features and device running features through sampling at a time interval in a process of executing a historical application, wherein an instruction stream feature and a device running feature in one set correspond to a same time interval; and
a classification module, configured to classify the plurality of sets of instruction stream features and device running features to obtain a plurality of categories, wherein device running features of different categories have a similarity greater than a first similarity threshold, device running features of a same category have a similarity less than a second similarity threshold, and instruction stream features of a same category have a distance less than a distance threshold; and
the obtaining module is further configured to obtain, for any category of the plurality of categories, a resource allocation mode corresponding to the any category based on device running features comprised in the any category; and obtain the first mapping relationship based on a resource allocation mode corresponding to each of the plurality of categories and at least one instruction stream feature comprised in each of the plurality of categories.

15. The apparatus according to claim 14, wherein the classification module is configured to cluster a plurality of device running features in the plurality of sets of instruction stream features and device running features based on a first quantity, to obtain a plurality of clusters based on a clustering result, wherein device running features of different clusters have a similarity greater than the first similarity threshold, and device running features of a same cluster have a similarity less than the second similarity threshold; and obtain the plurality of categories based on the first quantity of clusters if a distance between instruction stream features in any one of the plurality of clusters is less than the distance threshold.

16. The apparatus according to claim 14, wherein the classification module is configured to cluster a plurality of device running features in the plurality of sets of instruction stream features and device running features based on a first quantity, to obtain a plurality of clusters based on a clustering result, wherein device running features of different clusters have a similarity greater than the first similarity threshold, and device running features of a same cluster have a similarity less than the second similarity threshold; and cluster a plurality of device running features in the plurality of sets of instruction stream features and device running features based on a second quantity if a distance between instruction stream features in any one of the plurality of clusters is not less than the distance threshold, to re-obtain a plurality of clusters; and obtain the plurality of categories based on the second quantity of re-obtained clusters if a distance between instruction stream features in any one of the re-obtained plurality of clusters is less than the distance threshold.

17. The apparatus according to claim 12, wherein the determining module is configured to determine, based on a resource calculation model, a resource allocation mode corresponding to the first instruction stream feature, wherein the resource calculation model is used to output a corresponding resource allocation mode based on an input instruction stream feature; and determine the first resource allocation mode for the first application based on the resource allocation mode corresponding to the first instruction stream feature and the physical resource invoked by the first application.

18. The apparatus according to any one of claims 12 to 17, wherein the optimization module is configured to obtain, based on a second mapping relationship between resource allocation modes and physical resources, a first physical resource corresponding to the first resource allocation mode; and optimize, based on the first physical resource, the physical resource invoked by the first application.

19. The apparatus according to claim 18, wherein the physical resource comprises a central processing unit CPU, a graphics processing unit GPU, an application-specific integrated circuit ASIC, a field programmable gate array FPGA, a storage unit, and a memory unit; and
the optimization module is configured for: when the first resource allocation mode is target-resource-intensive, the first physical resource comprises a target resource accounting for a first proportion and another resource accounting for a second proportion, the target resource is any type of resource in the physical resource, the another resource is a resource other than the target resource in the physical resource, and the first proportion is greater than the second proportion.

20. The apparatus according to any one of claims 12 to 19, wherein the obtaining module is configured to obtain, when receiving the execution request of the first application within a first time period, the first instruction stream feature of the first application; the obtaining module is further configured to obtain, when receiving an execution request of a second application within a second time period, a second instruction stream feature of the second application, wherein the second application comprises a plurality of second instructions, and the second instruction stream feature indicates features of the plurality of second instructions; the determining module is further configured to determine a second resource allocation mode for the second application based on the second instruction stream feature and a physical resource invoked by the second application; and the optimization module is further configured to optimize, based on the second resource allocation mode, the physical resource invoked by the second application.

21. The apparatus according to any one of claims 12 to 20, wherein the first instruction stream feature comprises an instruction unit distribution feature, a basic block vector BBV distribution feature, and a hotspot function feature.

22. The apparatus according to any one of claims 14 to 16, wherein the device running feature comprises front-end latency, front-end bandwidth, back-end execution occupancy, back-end memory subsystem occupancy, a pipeline full-load rate, memory access performance, translation lookaside buffer TLB performance, operating system OS performance, instruction mix dependency, high-latency instruction distribution, cache behavior, and branch behavior.

23. A server, wherein the server comprises a processor, the processor is coupled to a memory, the memory stores at least one program instruction or code, and the at least one program instruction or the code is loaded and executed by the processor, to enable the server to implement the resource scheduling method according to any one of claims 1 to 11.
